# EUROPÄISCHE PATENTANMELDUNG

(11) **EP 1 914 199 A1**
(43) Veröffentlichungstag der Anmeldung: **23.04.2008**
(21) Anmeldenummer: 05759322.0
(22) Anmeldetag: 07.06.2005
(51) Int. Cl.: C01B 7/04

(54) **VERFAHREN ZUR HERSTELLUNG VON CHLOR**

(71) Anmelder: OBSCHESTVO OGRANICHENNOI OTVETSTVENNOSTJU KSM ENGINEERING, Moscow, 107078 (RU)
(72) Erfinder: KOPOSOV, Vladimir Vasilievich, Chapaevsk Samarskaya obl., 446102 (RU); SURZHIKOVA, Galina Valerievna, Chapaevsk Samarskaya obl., 446102 (RU); BEILIN, Alexandr Borisovich, Moscow, 123182 (RU)
(74) Vertreter: Lütjens, Henning
(86) Internationale Anmeldenummer: PCT/RU2005/000311
(87) Internationale Veröffentlichungsnummer: WO 2006/132561

(57) **Zusammenfassung**

Verfahren zur Chlorherstellung, umfassend die kontinuierliche Zufuhr eines gasförmigen Gemisches, das Chlorwasserstoff und Sauerstoff enthält, der unter Einwirkung von ultravioletter Strahlung aktiviert wurde, die eine Wellenlänge im Bereich von 1650 bis 2700 Å bei einer Dichte der ultravioletten Strahlung von (10-40) · 10⁻⁴ W/cm³ besitzt, wobei ein Druck von nicht mehr als 0,1 MPa eingehalten wird, oder der Sauerstoff aktiviert wurde unter Einwirkung der Bestrahlung mit einem Strom beschleunigter Elektronen, die eine Energie von 100 keV bis 2 MeV aufweisen, in eine Durchfluss-Reaktionszone. Die Oxidation des Chlorwasserstoffs erfolgt durch den aktivierten Sauerstoff unter Bildung des Zielprodukts.

## Beschreibung

Die vorliegende Erfindung betrifft ein Verfahren zur Chlorherstellung durch Gasphasenoxidation von Chlorwasserstoff.

### Stand der Technik

Gegenwärtig ist eine Vielzahl von Verfahren zur Chlorherstellung aus gasförmigem Chlorwasserstoff bekannt. Dabei wird der Prozess der Freisetzung von Chlor aus dem Ausgangsprodukt in der Regel in einer Reaktionszone durchgeführt, die eine Katalysatorschicht eines bestimmten Typs darstellt. So ist z.B. ein Verfahren zur Chlorherstellung durch die Gasphasenoxidation von Chlorwasserstoff in einem Reaktor mit einem Katalysatorfestbett unter Verwendung eines Gasstroms, enthaltend molekularen Sauerstoff, bekannt (US 2004/0115118 A1). Dieses Verfahren erlaubt Chlorherstellung in industriellem Maßstab, da es eine effiziente Ableitung von Wärme gewährleistet, die praktisch alle katalytischen Chlorherstellungsprozesse begleitet, die auf einer Oxidation von Chlorwasserstoff basieren.

Aufgrund dessen, dass das genannte Verfahren eine effiziente Wärmeableitung gewährleistet, ist für seine Realisierung jedoch die Verwendung von konstruktiv sehr komplizierten Reaktoren notwendig. Außerdem sieht das Verfahren die Verwendung spezieller Katalysatoren vor, die bei dem Temperaturprofil des Prozesses der Chlorherstellung aktiv sind.

Es ist auch ein Verfahren zur Chlorherstellung durch Oxidation von Chlorwasserstoff in Gegenwart eines Katalysators in Form von Kupfersalzen bekannt, die auf Aluminiumoxid aufgebracht werden: durch Tränken von Aluminiumoxid mit einer wässrigen Lösung von Kupfersalzen und Alkalimetallchloriden, anschließende Trocknung des Aluminiumoxids mit den aufgebrachten Salzen bei einer Temperatur von 105-110°C und Behandlung bei einer Temperatur von 450-500°C, welche die Überführung des Kupfersalzes zu Kupferoxid gewährleistet, und Calcinieren des erhaltenen Katalysators bei einer Temperatur von 900-1100°C für 1-6 Stunden bis zur Bildung eines Kupfer-Aluminiumspinells. Das Zielprodukt wird in gasförmigem Medium bei einer Temperatur von 350-500°C und bei einer Volumengeschwindigkeit von 500-1500 l/h der Chlorwasserstoffzufuhr in die von der Aluminiumspinellschicht gebildete Reaktionszone erhalten (SU 331649, SU 391994).

Gemäß den genannten Verfahren erfolgt die Chlorherstellung nur unter Hochtemperaturbedingungen (in der Größenordnung von 450-500°C), wobei sie mit der Verwendung von Katalysatoren verknüpft ist, deren Herstellung einen komplizierten technologischen Prozeß darstellt.

Bekannt ist weiterhin ein Verfahren zur Chlorherstellung durch Gasphasenoxidation von Chlorwasserstoff mit Luftsauerstoff mittels kontinuierlicher Zufuhr eines gasförmigen Gemisches, das Chlorwasserstoff und Sauerstoff enthält, in eine Durchfluss-Reaktionszone ohne Verwendung eines Katalysators. Der Prozess der Oxidation von Chlorwasserstoff mit Sauerstoff unter Bildung des Zielproduktes wird in einer Zone von Elektroimpuls-Entladungen bei einer Volumengeschwindigkeit von 26-413 l/h und einer Temperatur von 20-30°C durchgeführt (RU 1801945 A1, veröffentlicht am 15.03.1993, IPK: C0 B 7/04). Das genannte Verfahren ist weniger energieintensiv, da es bei Umgebungstemperatur durchgeführt wird, keine Erwärmung der Ausgangskomponenten auf hohe Temperaturen erfordert, und ist technologisch einfacher, da der Oxidationsprozeß ohne Verwendung eines Katalysators durchgeführt wird. Das genannte Verfahren gewährleistet jedoch keinen ausreichend hohen Umsetzungsgrad des Chlorwasserstoffs, welcher bestenfalls 74% erreicht. Außerdem erfolgt im aggressiven Medium der Reaktionszone eine schnelle, innerhalb von einigen Betriebsstunden erfolgende Zerstörung des Materials der Elektroden, welche für die Elektroimpuls-Entladungen sorgen, was die technologische Ausführbarkeit des Prozesses verringert und zur Folge hat, dass dieser nicht industriell anwendbar ist.

### Offenbarung der Erfindung

Der vorliegenden Erfindung liegt die Aufgabe zugrunde, durch die Schaffung von Bedingungen für einen stabilen und kontinuierlichen Oxidationsprozess von Chlorwasserstoff ein Verfahren zur Chlorherstellung bereitzustellen, welches bei hoher technologischer Stabilität die Durchführbarkeit des Verfahrens ermöglicht und den Umsetzungsgrad von Chlorwasserstoff erhöht.

Diese Aufgabe wird gelöst durch die Bereitstellung eines Verfahrens zur Chlorherstellung mittels kontinuierlicher Zufuhr eines gasförmigen Gemisches, das Chlorwasserstoff und Sauerstoff enthält, in eine Durchfluss-Reaktionszone und Oxidation des Chlorwasserstoffs durch Sauerstoff unter Bildung des Zielproduktes, worin erfindungsgemäß als Sauerstoff zur Oxidation des Chlorwasserstoffs ein Sauerstoff verwendet wird, der unter Einwirkung von ultravioletter Strahlung aktiviert wurde, die eine Wellenlänge aufweist, welche ausgewählt ist aus dem Bereich von 1650 bis 2700 Å, und mit einer Dichte der ultravioletten Strahlung von (10-40) · 10⁻⁴ W/cm³, wobei ein Druck von nicht mehr als 0,1 MPa eingehalten wird, oder ein Sauerstoff verwendet wird, der unter Einwirkung einer Bestrahlung mit einem Strom beschleunigter Elektronen aktiviert wurde, die eine Energie von 100 keV bis 2 MeV aufweisen.

Die Erfindung ermöglicht es, in einem technologisch stabilen Prozess, der für die industrielle Anwendung geeignet ist, eine nahezu 100%-ige Umsetzung des Chlorwasserstoffs zu erreichen.

Zur Verstärkung der oxidativen Eigenschaften des Sauerstoffs im Vergleich zu Chlor und zur Unterdrückung von Umkehrreaktionen unter Bildung u.a. von Chlorwasserstoff und von Parallelreaktionen unter Bildung u.a. von Chloroxid, die während des Oxidationsprozesses des Chlorwasserstoffs auftreten, ist es erfindungsgemäß zweckmäßig, die Sauerstoffaktivierung unter Einwirkung von ultravioletter Strahlung, die eine Wellenlänge aufweist, welche ausgewählt ist aus dem Bereich von 1650 bis 2700 Å, bei einer Dichte der ultravioletten Strahlung von (10-40)·10⁻⁴ W/cm³, wobei ein Druck von nicht mehr als 0,1 MPa eingehalten wird, oder die Sauerstoffaktivierung unter Einwirkung einer Bestrahlung mit einem Strom beschleunigter Elektronen, die eine Energie von 100 keV bis 2 MeV aufweisen, vor der kontinuierlichen Zufuhr des gasförmigen Gemisches in die Durchfluss-Reaktionszone durchzuführen.

Bei einer geringen Kapazität der Anlage zur Herstellung des Zielprodukts ist es gemäß der Erfindung zweckmäßig, die Sauerstoffaktivierung unter Einwirkung von ultravioletter Strahlung, die eine Wellenlänge im Bereich von 1650 bis 2700 Å aufweist, bei einer Dichte der ultravioletten Strahlung von (10-40)·10⁻⁴ W/cm³, wobei ein Druck von nicht mehr als 0,1 MPa eingehalten wird, oder die Sauerstoffaktivierung unter Einwirkung einer Bestrahlung mit einem Strom beschleunigter Elektronen, die eine Energie von 100 keV bis 2 MeV aufweisen, unmittelbar in der Durchfluss-Reaktionszone durchzuführen.

Weitere Ziele und Vorteile der vorliegenden Erfindung werden aus der nachfolgenden ausführlichen Beschreibung des Verfahrens zur Chlorherstellung und konkreten Ausführungsbeispielen dieses Verfahrens ersichtlich.

### Beste Ausführungsform der Erfindung

Das Verfahren der Chlorherstellung gemäß der vorliegenden Erfindung beruht auf der Verwendung von gasförmigem Chlorwasserstoff als Chlor enthaltendem Rohstoff für die Rückgewinnung von Chlor.

Gemäß des erfindungsgemäßen Verfahrens erfolgt die Herstellung von Chlor durch Rückgewinnung desselben in einem Prozess der Oxidation von gasförmigem Chlorwasserstoff mit Sauerstoff, welcher durch eine externe Energiequelle aktiviert wurde, anders ausgedrückt, mit aktivem Sauerstoff.

Aktiver Sauerstoff stellt ein Gemisch aus atomarem Sauerstoff, Ozon, molekularem Sauerstoff im angeregten Zustand und Sauerstoffionen dar.

Es wurde festgestellt, dass eine externe Energiequelle, welche die Herstellung des aktiven Sauerstoffs für den Oxidationsprozess des Chlorwasserstoffs gewährleistet, entweder eine Ultraviolettstrahlung oder ein Strom beschleunigter Elektronen sein kann. Hierbei wird gemäß des erfindungsgemäßen Verfahrens der Sauerstoff unter Einwirkung von ultravioletter Strahlung aktiviert, die eine Wellenlänge aufweist, welche ausgewählt ist aus dem Bereich von 1650 bis 2700 Å, bei einer Dichte der ultravioletten Strahlung von (10-40)·10⁻⁴ W/cm³, wobei ein Druck von nicht mehr als 0,1 MPa eingehalten wird. Oder der Sauerstoff wird durch Bestrahlung mit einem Strom beschleunigter Elektronen aktiviert, die eine Energie von 100 keV bis 2 MeV aufweisen.

Für die Durchführung der genannten Techniken zur Aktivierung des molekularen Sauerstoffs können allgemein bekannte Vorrichtungen eingesetzt werden. So können zum Beispiel Quecksilber-Quarz-Hochdrucklampen zur Aktivierung von Sauerstoff unter Einwirkung von ultravioletter Strahlung verwendet werden; während zur Aktivierung von Sauerstoff durch Einwirkung einer Bestrahlung mit einem Strom beschleunigter Elektronen Hochleistungsvakuumdioden mit Kaltkathode verwendet werden können.

Es wurde festgestellt, dass ultraviolette Strahlung ebenso wie Elektronenstrahlenergie in einem Medium von molekularem Sauerstoff eine Quelle zur Herstellung von atomarem Sauerstoff darstellt. Unter der Einwirkung von ultravioletter Strahlung, die eine Wellenlänge aufweist, welche ausgewählt ist im Bereich von 1650 bis 2700 Å, wie auch unter der Einwirkung eines Stroms beschleunigter Elektronen, die eine Energie von 100 keV bis 2 MeV aufweisen, zerfällt das O₂-Molekül in zwei nichtangeregte Atome, welche bei einem dreifachen Zusammenstoß Ozon bilden:

O₂+O→O₃

Die Hauptreaktion der Oxidation von Chlorwasserstoff sieht dabei wie folgt aus:

O + HCl → OH* + Cl

Jeder 10⁺⁵-te Zusammenstoß angeregter Sauerstoffatome mit HCl führt zu einer Reaktion. Da im Ergebnis der Reaktion zwei aktive Radikale gebildet werden und jedes von ihnen die Kette der Umwandlungen fortsetzt, gehört der Oxidationsprozess von Chlorwasserstoff zu den verzweigten Kettenreaktionen:

OH* + HCl → H₂O + Cl*

An Orten der Anhäufung von Radikalen findet eine Rekombination entsprechend der folgenden Gleichung statt:

Cl* + Cl⁻ → Cl² + hν

Cl + Cl + M = Cl² + M, wobei M ein neutrales Teilchen ist.

Zur Herstellung von Chlor gemäß des erfindungsgemäßen Verfahrens erfolgt eine kontinuierliche Zufuhr eines gasförmigen Gemisches in eine Durchfluss-Reaktionszone, wobei das Gemisch Chlorwasserstoff und Sauerstoff enthält, der unter Einwirkung von ultravioletter Strahlung aktiviert wurde, die eine Wellenlänge im Bereich von 1650 bis 2700 Å aufweist, bei einer Dichte der ultravioletten Strahlung von (10-40)·10⁻⁴ W/cm³, wobei ein Druck von nicht mehr als 0,1 MPa eingehalten wird, oder der Sauerstoff wurde unter Einwirkung der Bestrahlung durch einen Strom beschleunigter Elektronen aktiviert, die eine Energie von 100 keV bis 2 MeV aufweisen. In der Durchfluss-Reaktionszone erfolgt die Oxidation von Chlorwasserstoff durch Sauerstoff unter Entstehung von Chlor als Zielprodukt.

Das Verhältnis von Chlorwasserstoff und aktivem Sauerstoff in dem gasförmigen Gemisch ist vorzugsweise stöchiometrisch oder kommt dem stöchiometrischen Verhältnis maximal nahe (18 Gew.% Sauerstoff auf 82 Gew.-% Chlorwasserstoff). Ein Mangel an Sauerstoff in dem gasförmigen Gemisch senkt den Grad der Chlorwasserstoffumwandlung, wohingegen ein Überschuss an Sauerstoff zur Bildung von Chloroxiden führen kann.

Erfindungsgemäß kann die Sauerstoffaktivierung mittels des obengenannten Verfahrens vor der kontinuierlichen Zufuhr des gasförmigen Gemischs in die Durchfluss-Reaktionszone oder unmittelbar in der Durchfluss-Reaktionszone durchgeführt werden. Bei einer Sauerstoffaktivierung unmittelbar in der Durchfluss-Reaktionszone wirken die ultraviolette Strahlung oder die Bestrahlung durch einen Strom beschleunigter Elektronen nicht nur auf den molekularen Sauerstoff, sondern auch auf Chlorwasserstoff, wodurch aktivierte Chlorwasserstoffmoleküle gebildet werden, was einen stabil hohen Umsetzungsgrad des Chlorwasserstoffs gewährleistet.

Durch das erfindungsgemäße Verfahren wird eine 100%-ige Umwandlung des Gemisches in Chlor und Wasserdampf erreicht. Um eine Hydrolyse des gebildeten Chlors zu unterdrücken wird das Dampf-Gas-Gemisch in einem Kondensator auf 2-3°C gekühlt. Dabei wird der Hauptanteil des Wassers abgetrennt.

Auf diese Weise kann das erfindungsgemäße Verfahren ohne Katalysatoren durchgeführt werden und es bedarf keiner Hochtemperaturbedingungen, da es unter Umgebungstemperatur durchgeführt werden kann. Zudem ist das Verfahren hochzuverlässig und weist stabil gute technologische Parameter auf.

Zum besseren Verständnis der vorliegenden Erfindung werden folgende konkrete Ausführungsbeispiele angeführt.

### Beispiel 1

Ein gasförmiges Gemisch enthaltend 7,5 g Luft auf je 6,8 g Chlorwasserstoff wird kontinuierlich in die Durchfluss-Reaktionszone einer Laboranlage mit einer Volumengeschwindigkeit von 1 m/s und einem Druck von 0,1 MPa zugeführt. In der Durchfluss-Reaktionszone wird das zugeführte Gemisch bei einer Temperatur von 25-30°C der Einwirkung von ultravioletter Strahlung ausgesetzt, die eine Wellenlänge im Bereich von 1650 bis 2700 Å bei einer Dichte der ultravioletten Strahlung von 40 . 10⁻⁴ W/cm³ aufweist. Unter der Einwirkung der genannten ultravioletten Strahlung erfolgt die Aktivierung des molekularen Luftsauerstoffs und die Bildung von aktivem Sauerstoff. Dadurch wird eine Oxidation des Chlorwasserstoffs und eine 100%-ige Konvertierung des gasförmigen Gemisches in Chlor und Wasserdampf erreicht. Das gebildete Dampf-Gas-Gemisch wird am Ausgang der Reaktionszone in ein Absorptionssystem eingeleitet und in einer 5%-igen Kaliumjodidlösung absorbiert. Die mit Hilfe von Standardmethoden durchgeführte Analyse der wässrigen Lösung im Absorptionssystem zeigte einen Umsetzungsgrad des Chlorwasserstoffs, der dem theoretischen Wert nahe kommt: pH-Wert des Mediums=6.

### Beispiel 2

Ein Strom molekularen Sauerstoffs, der in eine Anlage zur Rückgewinnung von Chlor strömt, wird vor der Einleitung in die Durchfluss-Reaktionszone der Einwirkung von ultravioletter Strahlung ausgesetzt, die eine Wellenlänge im Bereich von 1650 bis 2700 Å bei einer Dichte der ultravioletten Strahlung von 10 · 10⁻⁴ W/cm³ aufweist. Unter Einwirkung der genannten ultravioletten Strahlung erfolgt die Aktivierung des molekularen Luftsauerstoffs und die Bildung von aktivem Sauerstoff. Der Strom des gebildeten aktiven Sauerstoffs wird mit einem Chlorwasserstoff-Strom vereinigt, wobei ein Verhältnis von 18 Gew.-% Sauerstoff zu 82 Gew.-% Chlorwasserstoff eingehalten wird, und der Strom wird mit einer Geschwindigkeit von 80 m/s und einem Druck von 0,1 MPa kontinuierlich in die Durchfluss-Reaktionszone eingeleitet. Die Temperatur des gasförmigen Gemisches am Eingang und am Ausgang der Anlage zur Rückgewinnung von Chlor beträgt 20-30°C. In der Durchfluss-Reaktionszone werden eine Oxidation des Chlorwasserstoffs und eine 100%-ige Konvertierung des gasförmigen Gemisches in Chlor und Wasserdampf erreicht. Das entstandene Dampf-Gas-Gemisch wird am Ausgang der Reaktionszone in ein Absorptionssystem eingeleitet und in einer 5%-igen Kaliumiodidlösung absorbiert. Die mittels Standardmethoden durchgeführte Analyse der wässrigen Lösung im Absorptionssystem zeigte einen Umsetzungsgrad des Chlorwasserstoffs, der dem theoretischen Wert nahe kommt: pH-Wert des Mediums=6.

### Beispiel 3

Ein gasförmiges Gemisch aus Chlorwasserstoff und molekularem Sauerstoff, die im stöchiometrischen Verhältnis genommen sind, wird mit einer Geschwindigkeit von 150 m/s kontinuierlich in die Durchfluss-Reaktionszone einer Anlage zur Rückgewinnung von Chlor eingeleitet. In der Durchfluss-Reaktionszone wird das zugeführte Gemisch bei einer Temperatur von 25-30°C der Einwirkung einer Bestrahlung mit einem Strom beschleunigter Elektronen ausgesetzt, die eine Energie von 100 keV bei einer Stromstärke von 800 A aufweisen. Unter Einwirkung der genannten Bestrahlung mit einem Strom beschleunigter Elektronen erfolgt die Aktivierung des molekularen Sauerstoffs und die Bildung von aktivem Sauerstoff. Dadurch werden in der Durchfluss-Reaktionszone eine Oxidation des Chlorwasserstoffs und eine 100%-ige Umwandlung des gasförmigen Gemisches in Chlor und Wasserdampf erreicht. Die Analyse des aus der Reaktionszone austretenden Dampf-Gas-Gemisches zeigt, dass der Umsetzungsgrad des Chlorwasserstoffs, abgesehen von technologischen Verlusten, dem theoretischen Wert nahe kommt.

### Beispiel 4

Ein Strom molekularen Sauerstoffs, der in eine Anlage zur Rückgewinnung von Chlor strömt, wird vor der Einleitung in die Durchfluss-Reaktionszone der Einwirkung einer Bestrahlung mit einem Strom beschleunigter Elektronen ausgesetzt, die eine Energie von 2 MeV bei einer Stromstärke von 1,5 kA aufweisen. Unter Einwirkung der genannten Bestrahlung mit einem Strom beschleunigter Elektronen erfolgt die Aktivierung des molekularen Luftsauerstoffs und die Bildung von aktivem Sauerstoff. Der Strom des entstandenen aktiven Sauerstoffs wird mit einem Chlorwasserstoff Strom vereinigt, wobei ein Verhältnis von 18 Gew.-% Sauerstoff zu 82 Gew.-% Chlorwasserstoff eingehalten wird, und der Strom wird mit einer Geschwindigkeit von 200 m/s kontinuierlich in die Durchfluss-Reaktionszone eingeleitet. Die Temperatur des gasförmigen Gemisches am Eingang und am Ausgang der Anlage zur Rückgewinnung von Chlor beträgt 20-30°C. In der Durchfluss-Reaktionszone werden eine Oxidation des Chlorwasserstoffs und eine 100%-ige Umwandlung des gasförmigen Gemisches in Chlor und Wasserdampf erreicht.

### Beispiel 5

Ein Strom molekularen Sauerstoffs, der in eine Anlage zur Rückgewinnung von Chlor strömt, wird vor der Einleitung in die Durchfluss-Reaktionszone der Einwirkung von ultravioletter Strahlung ausgesetzt, die eine Wellenlänge im Bereich von 1650 bis 2700 Å bei einer Dichte der ultravioletten Strahlung von 30 · 10⁻⁴ W/cm³ besitzt. Unter Einwirkung der besagten ultravioletten Strahlung erfolgt die Aktivierung des molekularen Luftsauerstoffs und die Bildung von aktivem Sauerstoff. Der Strom des entstandenen aktiven Sauerstoffs wird mit einem Chlorwasserstoff-Strom vereinigt, wobei ein Verhältnis von 18 Gew.-% Sauerstoff zu 82 Gew.-% Chlorwasserstoff eingehalten wird, und der Strom wird mit einer Geschwindigkeit von 50 m/s und einem Druck von 0,1 MPa kontinuierlich in die Durchfluss-Reaktionszone eingeleitet. Die Temperatur des gasförmigen Gemisches am Eingang und am Ausgang der Anlage zur Rückgewinnung von Chlor beträgt 20-30°C. In der Durchfluss-Reaktionszone werden eine Oxidation des Chlorwasserstoffs und eine 100%-ige Konvertierung des gasförmigen Gemisches in Chlor und Wasserdampf erreicht. Das gebildete Dampf-Gas-Gemisch wird am Ausgang der Reaktionszone in ein Absorptionssystem eingeleitet und in einer 5%-igen Kaliumiodidlösung absorbiert. Die mit Hilfe von Standardmethoden durchgeführte Analyse der wässrigen Lösung im Absorptionssystem zeigte einen Umsetzungsgrad des Chlorwasserstoffs, der dem theoretischen Wert nahe kommt: pH-Wert des Mediums=6.

### Beispiel 6

Ein gasförmiges Gemisch aus Chlorwasserstoff und molekularem Sauerstoff, die im stöchiometrischen Verhältnis genommen sind, wird mit einer Geschwindigkeit von 190 m/s kontinuierlich in die Durchfluss-Reaktionszone einer Anlage zur Rückgewinnung von Chlor eingeleitet. In der Durchfluss-Reaktionszone wird das zugeführte Gemisch bei einer Temperatur von 25-30°C der Einwirkung einer Bestrahlung mit einem Strom beschleunigter Elektronen ausgesetzt, die eine Energie von 200 keV bei einer Stromstärke von 4,5 kA aufweisen. Unter Einwirkung der genannten Bestrahlung mit einem Strom beschleunigter Elektronen erfolgt die Aktivierung des molekularen Sauerstoffs und die Bildung von aktivem Sauerstoff. Dadurch werden eine Oxidation des Chlorwasserstoffs und eine 100%-ige Konvertierung des gasförmigen Gemisches in Chlor und Wasserdampf erreicht. Die Analyse des aus der Reaktionszone austretenden Gasgemisches zeigt, dass der Umsetzungsgrad des Chlorwasserstoffs, abgesehen von technologischen Verlusten, dem theoretischen Wert nahe kommt.

### Gewerbliche Anwendbarkeit

Die Erfindung findet insbesondere bei der Verwertung von als Abgas anfallendem Chlorwasserstoff Anwendung, der sich bei Prozessen der chlororganischen Synthese bildet.

## Patentansprüche

1. Verfahren zur Chlorherstellung durch kontinuierliche Zufuhr eines gasförmigen Gemisches, das Chlorwasserstoff und Sauerstoff enthält, in eine Durchfluss-Reaktionszone und Oxidation des Chlorwasserstoffs durch Sauerstoff unter Entstehung des Zielproduktes, **dadurch gekennzeichnet, dass** als Sauerstoff zur Oxidation des Chlorwasserstoffs ein Sauerstoff verwendet wird, der unter Einwirkung von ultravioletter Strahlung aktiviert wurde, die eine Wellenlänge im Bereich von 1650 bis 2700 Å bei einer Dichte der ultravioletten Strahlung von (10-40) · 10⁻⁴ W/cm³ aufweist, wobei ein Druck von nicht mehr als 0,1 MPa eingehalten wird, oder der Sauerstoff aktiviert wurde unter Einwirkung einer Bestrahlung mit einem Strom beschleunigter Elektronen, die eine Energie von 100 keV bis 2 MeV aufweisen.

2. Verfahren zur Chlorherstellung nach Anspruch 1, **dadurch gekennzeichnet, dass** die Aktivierung des Sauerstoffs unter Einwirkung von ultravioletter Strahlung, die eine Wellenlänge im Bereich von 1650 bis 2700 Å bei einer Dichte der Ultraviolettstrahlung von (10-40) · 10⁻⁴ W/cm³ aufweist, wobei ein Druck von nicht mehr als 0,1 MPa eingehalten wird, oder die Aktivierung des Sauerstoffs unter Einwirkung der Bestrahlung mit einem Strom beschleunigter Elektronen, die eine Energie von 100 keV bis 2 MeV aufweisen, vor der kontinuierlichen Zufuhr des gasförmigen Gemisches in die Durchfluss-Reaktionszone durchgeführt wird.

3. Verfahren zur Chlorherstellung nach Anspruch 1, **dadurch gekennzeichnet, dass** die Aktivierung des Sauerstoffs unter Einwirkung von ultravioletter Strahlung, die eine Wellenlänge im Bereich von 1650 bis 2700 Å bei einer Dichte der ultravioletten Strahlung von (10-40) · 10⁻⁴ W/cm³ aufweist, wobei ein Druck von nicht mehr als 0,1 MPa eingehalten wird, oder die Aktivierung des Sauerstoffs unter Einwirkung der Bestrahlung mit einem Strom beschleunigter Elektronen, die eine Energie von 100 keV bis 2 MeV aufweisen, unmittelbar in der Durchfluss-Reaktionszone durchgeführt wird.
